# EUROPEAN PATENT APPLICATION

(11) **EP 2 937 370 A1**
(43) Date of publication of application: **28.10.2015**
(21) Application number: 13844587.9
(22) Date of filing: 13.12.2013
(51) Int. Cl.: C08G 63/08, C08G 63/78, C08G 63/85, C08L 67/04

(54) **PRODUCTION METHOD FOR POLYLACTIDE RESIN**

(30) Priority: 17.12.2012 KR 20120147592; 12.12.2013 KR 20130154950
(71) Applicant: LG Chem, Ltd., Seoul 150-721 (KR)
(72) Inventor: SOHN, Jung Min, Daejeon 305-738 (KR); PARK, Seung Young, Daejeon 305-738 (KR); YOON, Sung Cheol, Daejeon 305-738 (KR); SHIM, Do Yong, Daejeon 305-738 (KR)
(74) Representative: Goddar, Heinz J.
(86) International application number: PCT/KR2013/011613
(87) International publication number: WO 2014/098425

(57) **Abstract**

The present invention relates to a preparation method of a polylactide resin, in which the preparation method includes the step of performing ring opening polymerization of lactide monomers in the presence of an organometallic catalyst and an aromatic monomer scavenger, and the aromatic monomer scavenger is used in an amount of 0.1 to 20 parts by weight, based on 100 parts by weight of the lactide monomers.

## Description

### [TECHNICAL FIELD]

The present invention relates to a preparation method of a polylactide resin.

### [BACKGROUND OF ART]

Polylactide (or poly(lactic acid)) resins are a type of resin containing a repeating unit of the following Chemical Formula. Unlike the existing petroleum-based resins, these polylactide resins are based on biomass, and thus they have environment-friendly features such that they can be used as a renewable resource, and show low CO₂ emissions that contribute to global warming during their production, compared to other resins, and are biodegradable in the presence of moisture and microorganisms when being buried, as well as have suitable mechanical strength equivalent to the existing known petroleum-based products.

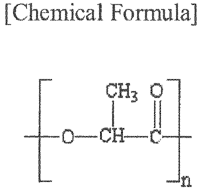

These polylactide resins have been mainly used for disposable packaging/containers, coatings, foam products, films/sheets, and fabrics. Recently, many efforts have been actively made to use the polylactide resins as semi-permanent materials for mobile phone bodies or car interior parts, after their physical properties are improved by mixing the polylactide resins with known resins such as ABS, polycarbonate, polypropylene or the like. However, the polylactide resins tend to biodegrade in themselves due to factors such as the catalyst used in their preparation, moisture in the air, or the like, and up to now, such drawbacks of their own properties have limited their application.

On the other hand, previously known processes for preparing the polylactide resins involve either directly subjecting lactic acid to condensation polymerization or carrying out ring opening polymerization of lactide monomers in the presence of an organometallic catalyst. In this regard, the direct condensation polymerization can produce the polymer at a low cost but it is difficult for the resulting polymers to have a high molecular weight in terms of a weight average molecular weight of 100,000 or more, making it difficult to sufficiently ensure the physical and mechanical properties of the polylactide resins. Further, the ring opening polymerization of the lactide monomers entails a higher cost than the condensation polymerization since the lactide monomers should be prepared from lactic acid, but it can produce a polymer having a relatively high molecular weight and is advantageous in controlling the polymerization, and thus it is commercially used.

Meanwhile, as the organometallic catalyst used in such ring opening polymerization of lactide, Lewis acids are used, which are represented by Sn-catalysts such as tin(II) 2-ethylhexanoate (hereinafter, Sn-(Oct)₂). Upon ring opening polymerization, Sn-catalysts are added together with alcohols as an initiator, and activated in the form of Sn-(OR)₂ by the initiator, and then catalyzes the polymerization. In particular, Sn-(Oct)₂ is reacted with the alcohol initiator to produce octanoic acid, which is converted into active species such as tin(monoalkoxide) or tin(dialkoxide).

Such ring opening polymerization of lactide monomers generally occurs as bulk polymerization. Bulk polymerization is a polymerization reaction that is carried out substantially without using any solvent. In this regard, "without using any solvent" includes use of a small amount of a solvent for dissolving the catalyst, for example, less than at most 1 mL of a solvent per 1 Kg of the lactide monomer. However, as bulk polymerization reaction proceeds, viscosity of the polylactide melt is increased. Due to high viscosity, the polylactide melt becomes less fluid, and thus transport speed is decreased. In addition, a residence time at a high temperature is increased in order to remove residual lactide during an evaporation process, problematically resulting in discoloration of the resin and acceleration of thermal decomposition.

### [DETAILED DESCRIPTION OF THE INVENTION]

### [Technical Problem]

The present invention provides a preparation method of a polylactide resin including the step of performing ring opening polymerization of lactide monomers in the presence of an aromatic monomer scavenger, in which a polylactide melt is easily transported, and the efficiency of removing residual lactide is increased to reduce the residence time at a high temperature, thereby minimizing discoloration and thermal decomposition of the polylactide resin.

### [Teclmical Solution]

The present invention provides a preparation method of a polylactide resin including the step of performing ring opening polymerization of lactide monomers in the presence of an organometallic catalyst and an aromatic monomer scavenger, in which the aromatic monomer scavenger is used in an amount of 0.1 to 20 parts by weight, based on 100 parts by weight of the lactide monomers.

Further, the aromatic monomer scavenger may be one or more selected from the group consisting of ethyl benzene, toluene, xylene, diphenyl ether, chlorobenzene, benzene, and dichlorobenzene.

Further, the organometallic catalyst may be added at a ratio of 0.001 to 1.0 mole, based on 100 moles of the lactide monomers.

Further, the organometallic catalyst may be a Sn-containing catalyst.

Herein, the Sn-containing catalyst may be a Sn-(Oct)₂ catalyst.

Herein, the ring opening polymerization may be performed in the presence of an initiator containing a hydroxyl-containing compound.

Herein, the hydroxyl-containing compound may have carbon atoms of 8 or more.

Herein, the initiator may be added at a ratio of 0.001 to 1 mole, based on 100 moles of the lactide monomers.

Further, the ring opening polymerization may be performed by polymerization in solution.

The ring opening polymerization may be performed at a temperature of 120 to 220 °C for 0.5 to 8 hours.

In one aspect, the present invention provides a polylactide resin prepared by the method.

Herein, the polylactide resin may have a weight average molecular weight of 10,000 to 1,000,000.

Further, the polylactide resin may have an acidity of less than 50 meq/kg.

### [ADVANTAGEOUS EFFECTS]

A preparation method of a polylactide resin according to the present invention reduces viscosity of a polylactide melt during a polymerization process. Thus, the polylactide melt is easily transported, and the efficiency of removing residual lactide is increased due to the low viscosity of the polylactide melt so as to reduce the residence time at a high temperature, thereby minimizing discoloration and thermal decomposition of the polylactide resin.

### [BRIEF DESCRIPTION OF DRAWINGS]

FIG. 1 is a graph showing the torque of a reactor impeller which was measured during polymerization reaction of polylactide resins prepared according to Examples 1 and 2, and Comparative Example 1 of the present invention; and
FIG. 2 is a graph showing changes in the melting point of L-lactide depending on the amount of ethyl benzene added according to Experimental Example 2 of the present invention.

### [DETAILED DESCRIPTION OF THE EMBODIMENTS]

While the present invention is susceptible to various modifications, exemplary embodiments thereof have been shown by way of specific examples in the drawings and are herein described in detail. It should be understood, however, that the description herein of specific embodiments is not intended to limit the invention, but on the contrary, the intention is to cover all modifications, equivalents, and alternatives falling within the spirit and scope of the invention. In the description of the present invention, when a detailed description of well-known technology relating to the present invention may unnecessarily make unclear the spirit of the present invention, a detailed description thereof will be omitted.

The present invention provides a preparation method of a polylactide resin including the step of performing ring opening polymerization of lactide monomers in the presence of an organometallic catalyst and an aromatic monomer scavenger, in which the aromatic monomer scavenger is used in an amount of 0.1 to 20 parts by weight, based on 100 parts by weight of the lactide monomers.

Further, the present invention provides a polylactide resin prepared by the above method and a polylactide resin composition including the polylactide resin.

Hereinafter, the preparation method of the polylactide resin according to specific embodiments of the present invention will be described in more detail.

Unless otherwise stated explicitly, several terms as used herein are defined as follows.

Unless particularly mentioned herein, the term "including" or "containing" refers to including some element (or component) without any limitation, and should not be construed as excluding addition of other elements (or components).

Also, in the entire specification, the term 'lactide monomer' can be defined as follows. Typically, lactides can be classified into L-lactide consisting of L-lactic acid, D-lactide consisting of D-lactic acid, and meso-lactide consisting of an L-type and a D-type. Also, a mixture of L-lactide and D-lactide (50:50) is referred to as D,L-lactide or rac-lactide. Among these lactides, the polymerization proceeding only with either of L-lactide and D-lactide that have a high level of optical purity is known to yield an L- or D-polylactide (PLLA or PDLA) with a high level of stereoregularity. Such polylactides have a faster crystallization rate and a higher crystallization degree than a polylactide having a low level of optical purity. However, the term 'lactide monomer' is defined to include all types of lactides regardless of the characteristic differences of lactides depending on their types and the characteristic differences of the polylactides as obtained therefrom.

In the entire specification, the term 'polylactide resin' is defined to comprehensively refer to a homopolymer or copolymer including a repeating unit represented by the following Chemical Formula.

Such 'polylactide resin' can be prepared by a process including a step of forming the following repeating unit by the ring opening polymerization of the 'lactide monomer' as described above. The polymer obtained after the completion of such ring opening polymerization and the formation of the following repeating unit can be referred to as the 'polylactide resin'. As stated above, the category of the 'lactide monomer' includes any types of lactides.

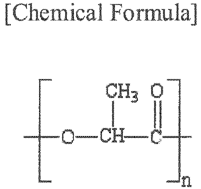

In the category of the polymer that can be referred to as the 'polylactide resin', all the polymers are included in any state after the completion of the ring opening polymerization and the formation of the repeating unit, for example, unpurified or purified polymers after the completion of the ring opening polymerization, the polymers contained in the liquid or solid resin composition prior to being molded into an article, or the polymers contained in plastics or woven materials after being molded into an article. Accordingly, in the entire specification, properties of the 'polylactide resin' (such as acidity, weight average molecular weight, amount of the catalyst residue, or the like) can be defined by the properties of the polymer in any state after the completion of the ring opening polymerization and the formation of the repeating unit.

Also, in the entire specification, the term 'polylactide resin composition' is defined to refer to any composition prior to or after being molded into an article, including one containing the 'polylactide resin' or one prepared therefrom. In the category of the composition that can be referred to as such 'polylactide resin composition', not only a liquid or solid resin composition in the form of a master batch or a pellet before being molded into an article is included, but also a plastic or a woven material after being molded into an article is included.

According to one embodiment, the present invention provides a preparation method of a polylactide resin including the step of performing ring opening polymerization of lactide monomers in the presence of an organometallic catalyst and an aromatic monomer scavenger, in which the aromatic monomer scavenger is used in an amount of 0.1 to 20 parts by weight, based on 100 parts by weight of the lactide monomers.

The preparation method of the polylactide resin according to the present invention is characterized in that the aromatic monomer scavenger as described above is used so as to reduce viscosity of the polylactide melt during the polymerization process, and thus the polylactide melt is easily transported, and the efficiency of removing residual lactide is increased due to the low viscosity of the polylactide melt so as to reduce the residence time at a high temperature, thereby minimizing discoloration and thermal decomposition of the polylactide resin.

The aromatic monomer scavenger can be defined as a monomer scavenger containing a structure having a benzene ring. As long as the aromatic monomer scavenger is able to dissolve the lactide monomer and the organometallic catalyst, its composition is not limited. Specifically, the aromatic monomer scavenger may be selected from the group consisting of ethyl benzene, toluene, xylene, diphenyl ether, chlorobenzene, benzene, and dichlorobenzene.

Further, the aromatic monomer scavenger may be used in an amount of 0.1 to 20 parts by weight, based on 100 parts by weight of the lactide monomers. If the monomer scavenger is used in an amount of less than 0.1 parts by weight, based on 100 parts by weight of the lactide monomers, there is a problem that the effect of reducing viscosity of the polylactide melt is unsatisfactory. If the monomer scavenger is used in an amount of more than 20 parts by weight, there are problems that it is difficult to handle the polymers after polymerization because viscosity decreases with a decrease in the molecular weight, and the polymerization operating temperature is generally higher than the boiling point of the monomer scavenger to cause high vapor pressure.

Further, the organometallic catalyst may be added at a ratio of 0.001 to 1.0 mole, based on 100 moles of the lactide monomers.

The addition amount of the organometallic catalyst is not limited, but it may be preferably added at a ratio of 0.001 to 1.0 mole, based on 100 moles of the lactide monomers. If the addition ratio of the catalyst becomes extremely low, it is undesirable in that the polymerization activity is not sufficient. On the contrary, if the addition ratio of the catalyst becomes too high, the amount of the residual catalyst in the prepared polylactide resin is increased to cause decomposition or decrease in the molecular weight of the resin and discoloration of the resin while processing.

Meanwhile, the organometallic catalyst may be a Sn-containing catalyst, and such Sn-containing catalyst may be a Sn-(Oct)₂ catalyst. As the organometallic catalyst used in the ring opening polymerization of lactide, Lewis acids are generally used, which are represented by Sn-catalysts such as tin(II) 2-ethylhexanoate (hereinafter, Sn-(Oct)₂). Upon ring opening polymerization, Sn-catalysts are added together with alcohols as an initiator, and activated in the form of Sn-(OR)₂ by the initiator, and then catalyzes the polymerization. In particular, Sn-(Oct)₂ is reacted with the alcohol initiator to produce octanoic acid, which is converted into active species such as tin(monoalkoxide) or tin(dialkoxide).

As such, if the Sn-(Oct)₂ catalyst is used as the Sn-containing catalyst, the ring opening polymerization may be performed in the presence of an initiator containing a hydroxyl-containing compound. The initiator is reacted with the catalyst to substantially form a catalyst active species and functions to initiate the ring opening polymerization reaction. In addition, the initiator is partially involved in depolymerization or decomposition of the resin and functions to regulate the molecular weight.

As the initiator, a compound having a hydroxyl group can be used without limitation. However, if the compound has carbon atoms of less than 8, it may be vaporized at the ring opening polymerization temperature because of the low molecular weight, and thus this can hinder its involvement in the polymerization reaction. For this reason, a hydroxyl-containing compound having carbon atoms of 8 or more is preferably used as the initiator.

Further, the ring opening polymerization may be performed by adding the initiator at a ratio of 0.001 to 1 mole, based on 100 moles of the lactide monomers. If the addition ratio of the initiator becomes extremely low, the molecular weight of the resin as obtained by the ring opening polymerization would be so high that subsequent processing can become difficult. If the addition ratio of the initiator becomes too high, the molecular weight and polymerization activity of the resin may decrease.

On the other hand, the lactide monomer can be prepared from lactic acid. In addition, the lactide monomer includes all types of lactides, for example, it can be any of L, L-lactide, D, L-lactide or D, D-lactide.

Further, the ring opening polymerization may be performed by polymerization in solvent. If such polymerization in solution is performed, the polymerization liquid maintains low viscosity during polymerization reaction, which is preferable in terms of mixing and transport of polywater.

The ring opening polymerization may be performed at a temperature of 120 to 220 °C for 0.5 to 8 hours.

Further, the ring opening polymerization of the lactide monomers may be performed at a temperature of 120 to 220 °C. Meanwhile, the polymerization reaction may be performed at the above described temperature for 0.5 to 8 hours, but the time is not limited to the above described.

Meanwhile, in another aspect, the present invention provides a polylactide resin that is prepared by the above described method. The polylactide resin prepared by the above described preparation method has a high molecular weight, and specifically a weight average molecular weight of 100,000 to 1,000,000. In addition, the polylactide resin prepared by using the above catalyst has an acidity of less than 50 meq/kg, preferably an acidity of less than 30 meq/kg, and most preferably an acidity of less than 10 meq/kg.

Meanwhile, in still another aspect, the present invention provides a polylactide resin composition including the above described polylactide resin.

Since the polylactide resin composition includes the polylactide resin having a high molecular weight, it is expected to exhibit excellent physical and mechanical properties, and thus preferably used in a semi-permanent use such as for packaging for electronics or interior materials for vehicles.

Further, since the polylactide resin composition includes the biodegradable polylactide resin, it can be used in the preparation of biodegradable containers or disposable products, such as disposable container, disposable fork or the like.

In this regard, the polylactide resin composition may include the polylactide resin either alone or in combination with a polycarbonate resin, an ABS resin, or a polypropylene resin. However, if the composition is used in packaging for electronics or interior materials for vehicles, the constitution of the polylactide resin composition is not limited, but the composition may preferably include the polylactide resin in an amount of less than 50% by weight, considering reduction in mechanical properties such as durability. In addition, if the composition is used in the preparation of products that are further required to have biodegradability, such as disposable products or the like, the constitution thereof is not limited, but the composition may preferably include the polylactide resin of 60% by weight or more, and more preferably the polylactide resin of 80% by weight or more.

Further, the polylactide resin composition may further include various additives that have been contained in a wide range of conventional resin compositions.

The polylactide resin composition may be produced either as liquid or solid resin compositions prior to being molded into the end-product or as plastics or woven materials in their end-product state. The resulting plastics or woven materials may be prepared by typical processes depending on the type of each product.

### [Mode for Invention]

Hereinafter, the preferred Examples of the present invention will be described in more detail with reference to the accompanying drawings. However, these Examples are for illustrative purposes only, and the scope of the invention is not intended to be limited by these examples.

### Example 1

755 g of L-lactide, 0.07 g of Sn-(Oct)₂ catalyst, and 45 g of ethyl benzene were put into a 2 L-polymerization reactor, and polymerization was performed under stirring at 180 degree for 300 minutes at a speed of 100 rpm so as to prepare a polylactide resin.

### Example 2

A polylactide resin was prepared in the same manner as in Example 1, except for using 26 g of ethyl benzene.

### Example 3

A polylactide resin was prepared in the same manner as in Example 1, except for using 90 g of ethyl benzene.

### Comparative Example 1

755 g of L-lactide and 0.07 g of Sn-(Oct)₂ catalyst were put into a 2 L-polymerization reactor, and polymerization was performed under stirring at 180 degree for 300 minutes at a speed of 100 rpm so as to prepare a polylactide resin.

### Comparative Example 2

755 g of L-lactide, 0.07 g of Sn-(Oct)₂ catalyst, and 45 g of 1-butanol were put into a 2 L-polymerization reactor, and polymerization was performed under stirring at 180 degree for 300 minutes at a speed of 100 rpm so as to prepare a polylactide resin.

### Comparative Example 3

755 g of L-lactide, 0.07 g of Sn-(Oct)₂ catalyst, and 450 g of ethyl benzene were put into a 2 L-polymerization reactor, and polymerization was performed under stirring at 180 degree for 300 minutes at a speed of 100 rpm so as to prepare a polylactide resin.

### Experimental Example 1

The conversion rate and molecular weight of the polylactide resins obtained according to Examples and Comparative Examples and the torque of a reactor impeller for 300 minutes after polymerization initiation were measured, respectively.

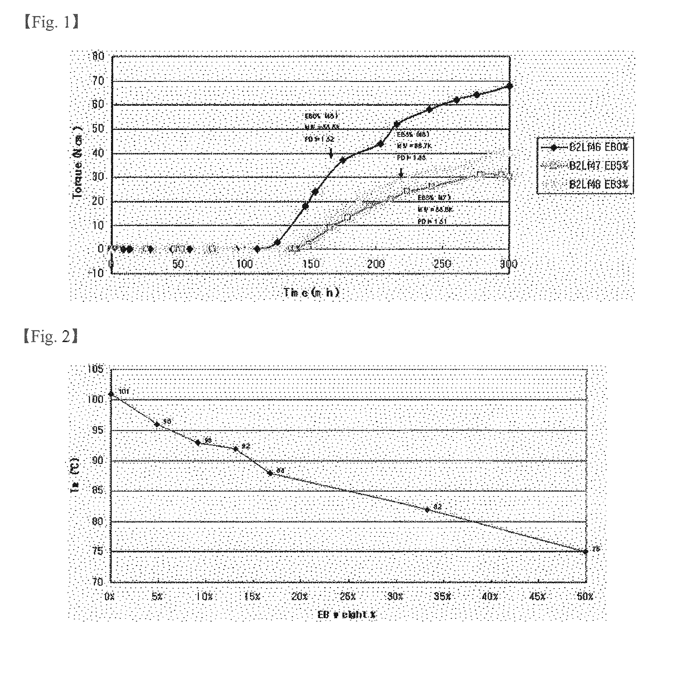

The conversion rate was measured by Varian Unity Inova 500MHz NMR (manufactured by Varian), and the molecular weight was measured by GPC (gel permeation chromatography). The measurement results are shown in Table 1 and the results of measuring torque over time are shown in FIG. 1.

**[Table 1]**

| | Example 1 | Example 2 | Example 3 | Comparative Example 1 | Comparative Example 2 | Comparative Example 3 |
|---|---|---|---|---|---|---|
| Conversion rate(%) | 95.81 | 95.51 | 95.47 | 95.53 | 89.93 | 93.25 |
| Mw(g/mol) | 88,568 | 86,712 | 87,235 | 88,848 | 10,235 | 80,873 |
| Mn(g/mol) | 67,609 | 65,431 | 66,121 | 67,110 | 8,346 | 68,923 |
| PDI | 1.31 | 1.33 | 1.33 | 1.32 | 1.0 | 1.29 |
| Torque (t=300min) (Ncm) | 30 | 40 | 10 | 68 | 0 | 0 |

As shown in FIG. 1, it was found that the polylactide resins prepared by using ethyl benzene according to Example 1 (B2Lf47 EB 5%), Example 2 (B2Lf48 EB 3%), and Example 3 showed low torque, compared to the polylactide resin prepared by using no ethyl benzene according to Comparative Example 1 (B2Lf46 EB 0%).

Meanwhile, it was found that use of 1-butanol instead of ethyl benzene in Comparative Example 2 generates a problem of difficult synthesis, and use of excessive amount of ethyl benzene in Comparative Example 3 generates a problem of difficult handling of the resin after polymerization because of high fluidity.

That is, in the present invention, the preferred torque of the polylactide resin is 10 to 50. If the torque is less than 10, the fluidity is excessively high, and thus it is difficult to handle the resin after polymerization. If the torque is more than 50, there is a problem of excessively high viscosity.

In conclusion, the preparation method of polylactide according to the present invention is able to reduce viscosity of the polylactide melt during a polymerization process. Thus, the polylactide melt is easily transported, and the efficiency of removing residual lactide is increased due to the low viscosity of the polylactide melt so as to reduce the residence time at a high temperature, thereby minimizing discoloration and thermal decomposition of the polylactide resin.

### Experimental Example 2

45, 90, 135, 180, 450, or 900 g of ethyl benzene was added to 900 g of L-lactide, respectively and the melting point of L-lactide was recorded using DSC (Differential Scanning Calorimeter) (manufactured byb mettle-toledo) while heating. The measurement results are shown in FIG. 2.

As shown in FIG. 2, as the addition amount of ethyl benzene was increased, the melting point of lactide monomer decreased. Accordingly, the preparation method of polylactide according to the present invention is advantageous in that before polymerization, the lactide monomers can be melted at a lower temperature than that of the conventional process, so as to be transported to a polymerization reactor.

Although specific parts of the present invention have been described in detail, it will be apparent to those skilled in the art that these specific descriptions are provided for preferred embodiment and the scope of the present invention is not limited thereby. Therefore, the scope of the present invention should be defined only by the accompanying claims and equivalents thereof

## Claims

1. A preparation method of a polylactide resin, comprising the step of performing ring opening polymerization of lactide monomers in the presence of an organometallic catalyst and an aromatic monomer scavenger, wherein the aromatic monomer scavenger is used in an amount of 0.1 to 20 parts by weight, based on 100 parts by weight of the lactide monomers.

2. The preparation method according to claim 1, wherein the aromatic monomer scavenger is one or more selected from the group consisting of ethyl benzene, toluene, xylene, diphenyl ether, benzene, chlorobenzene, and dichlorobenzene.

3. The preparation method according to claim 1, wherein the organometallic catalyst is added at a ratio of 0.001 to 1.0 mole, based on 100 moles of the lactide monomers.

4. The preparation method according to claim 1, wherein the organometallic catalyst is a Sn-containing catalyst.

5. The preparation method according to claim 4, wherein the Sn-containing catalyst is a Sn-(Oct)₂ catalyst.

6. The preparation method according to claim 5, wherein the ring opening polymerization is performed in the presence of an initiator containing a hydroxyl-containing compound.

7. The preparation method according to claim 6, wherein the hydroxyl-containing compound has carbon atoms of 8 or more.

8. The preparation method according to claim 6, wherein the initiator is added at a ratio of 0.001 to 1 mole, based on 100 moles of the lactide monomers.

9. The preparation method according to claim 1, wherein the ring opening polymerization is performed by polymerization in solution.

10. The preparation method according to claim 1, wherein the ring opening polymerization is performed at a temperature of 120 to 220 °C for 0.5 to 8 hours.

11. A polylactide resin that is prepared by the method according to any one of claims 1 to 10.

12. The polylactide resin according to claim 11, wherein the polylactide resin has a weight average molecular weight of 10,000 to 1,000,000.

13. The polylactide resin according to claim 11, wherein the polylactide resin has an acidity of less than 50 meq/kg.

14. A polylactide resin composition comprising the polylactide resin of claim 11.
